(19) Europäisches Patentamt
European Patent Office
Office européen des brevets

(11) Numéro de publication: **0 317 377 B1**

(12) **FASCICULE DE BREVET EUROPEEN**

(45) Date de publication de fascicule du brevet: **09.06.93**

(51) Int. Cl.5: **C08L 83/07**, G02B 1/04

(21) Numéro de dépôt: **88402645.1**

(22) Date de dépôt: **20.10.88**

(54) **Elastomère de silicones mouillable convenant à la fabrication de lentilles de contact.**

(30) Priorité: **23.10.87 FR 8714681**

(43) Date de publication de la demande:
**24.05.89 Bulletin 89/21**

(45) Mention de la délivrance du brevet:
**09.06.93 Bulletin 93/23**

(84) Etats contractants désignés:
**CH DE FR GB IT LI NL SE**

(56) Documents cités:
**GB-A- 2 091 750**
**US-A- 4 365 050**
**US-A- 4 588 624**
**US-A- 4 673 584**

(73) Titulaire: **ESSILOR INTERNATIONAL, Cie Générale d'Optique**
**1 Rue Thomas Edison, Echat 902**
**F-94028 Créteil Cédex(FR)**

(72) Inventeur: **Frances, Jean-Marc**
**3 Avenue Condorcet**
**F-69100 Villeurbanne(FR)**
Inventeur: **Wajs, Georges**
**69 Avenue Danièle Casanova**
**F-94200 Ivry sur Seine(FR)**

(74) Mandataire: **Thibon-Littaye, Annick**
**Cabinet A. THIBON-LITTAYE 11 rue de l'Etang**
**F-78160 Marly-le-Roi (FR)**



Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention est le fruit d'une coopération entre ESSILOR et RHONE-POULENC, cette dernière société en la personne de Jean-Marc FRANCES. Elle concerne la préparation et la constitution d'un matériau de bonne mouillabilité, présentant des propriétés qui le rendent utile pour la fabrication de lentilles de contact.

Divers matériaux obtenus à partir de compositions organiques sont proposées actuellement pour la fabrication de lentilles de contact. Parmi ces compositions, l'invention s'intéresse spécialement à celles qui sont à base d'élastomères de silicones, c'est-à-dire de polymères du type organo-polysiloxanes.

Les élastomères de silicones sont en effet des matériaux particulièrement intéressants pour les lentilles de contact du fait de leurs propriétés mécaniques et optiques, mais aussi de leur grande perméabilité à l'oxygène, laquelle suffit à préserver le métabolisme gazeux de la cornée sans qu'il soit nécessaire, comme dans les hydrogels à base de méthacrylate d'hydroxy-éthyle ou composés similaires, que ces polymères renferment des quantités importantes d'eau. On connaît donc diverses compositions de polyorganosiloxanes qui sont susceptibles d'être moulées et durcies sous forme de lentilles de contact.

Par contre, les polymères connus ne conduisent pas à des articles en élastomères de silicones qui présentent directement les propriétés de mouillabilité nécessaires dans le milieu lacrymal.

De fait, on connaît déjà des procédés qui visent à rendre les compositions de silicones aisément hydrophiles sans altérer leurs caractéristiques optiques et leurs propriétés mécaniques. Ils consistent en général à modifier les propriétés de surface des articles résultant de la mise en forme et du durcissement de telles compositions afin d'obtenir ainsi un matériau présentant la mouillabilité souhaitée.

Selon certaines techniques, un tel traitement de surface conduit à un copolymère de silicone et de polyvinyl-pyrrolidone. On peut citer ici le brevet FR 1 526 394 et le brevet US 3 700 573 qui concernent le greffage radiochimique de vinyl-pyrrolidone sur des élastomères de silicones, et le brevet US 4 229 273 où le même greffage est réalisé par irradiation sous un rayonnement ultraviolet non ionisant. Cependant, l'expérience clinique de lentilles de contact en copolymères silicone/polyvinylpyrrolidone obtenues conformément à ces brevets montre un encrassement rapide, par dépôt de lipides et de protéines qui s'absorbent à la surface du matériau des lentilles, avec pour conséquence la perte de leur mouillabilité.

D'autres brevets, parmi lesquels les brevets FR 2 111 959, US 4 055 378, FR 2 166 027, FR 2 407 232, FR 2 483 310, préconisent un traitement sous décharge de plasma afin de rendre mouillable un matériau à base d'élastomères de silicones, mais là encore, ce traitement s'est révélé inefficace après un temps plus ou moins long, mais toujours incompatible avec la durée de vie nécessaire pour un tel produit.

On peut citer d'autre part le brevet US 4 332 922 et le brevet européen 0033754, qui avec pour objectif d'augmenter la perméabilité à l'oxygène de lentilles de contact, proposent de faire réagir un élastomère de silicone, une fois mis en forme et durci, avec un hydrogénosiloxane ayant de 3 à 11 atomes de silicium pour y introduire des groupements SiH, puis d'agir sur ces groupements pour les transformer en groupements hydroxylés Si-OH ou de fixer dessus par greffage des molécules diverses qui contiennent une double liaison. Bien que l'allylglucose soit là cité incidemment, au même titre que la vinylpyrrolidone, il est clair que pour obtenir une hydrophilie satisfaisante, les molécules greffées sont des éthers ou des esters qui doivent subir une opération supplémentaire de transestérification avant un dernier traitement au plasma. Outre la complexité manifeste de ce procédé à phases opératoires multiples, il a l'inconvénient de fragiliser la couche de surface du matériau et le problème de la longévité des lentilles n'est pas résolu.

D'autres chercheurs sont partis d'une meilleure connaissance, acquise récemment, du film lacrymal et des conditions naturelles régnant au voisinage de l'épithélium cornéen, après que notamment l'on ait montré le rôle primordial que semble jouer la mucine contenue dans le liquide lacrymal en s'adsorbant sur des micro-villosités de l'épithélium, constituées de mucopolysaccharides faisant partie intégrante de la membrane cellulaire. Ils se sont donc orientés vers la fixation de composés de la famille des sucres à la surface du matériau des lentilles de contact.

On peut évoquer ici l'allylglucose des brevets précédents, mais surtout le brevet WO 83/03977, qui utilise un polysaccharide fixé par l'intermédiaire d'un silane porteur d'un groupe époxy servant d'agent de couplage. Mais la fonctionnalisation préalable d'un sucre est une opération délicate et non applicable à tous les sucres, et le couplage d'un silane sur la surface de l'article pose des problèmes difficiles à résoudre.

On peut en rapprocher aussi le brevet US 4 500 676, qui propose une enduction d'acide hyaluronique sur divers types de polymères, en présence d'un agent de réticulation, et qui dans le cas de lentilles à base d'élastomère de silicones, applique ainsi une solution de hyaluronate de sodium après toutefois un traitement préalable de l'article par un silane aminé. On se trouve là encore face à des difficultés d'ordre pratique pour obtenir un revêtement de qualité optique conférant à un matériau de silicones une mouillabilité durable.

Ces difficultés sont résolues selon la présente invention, en réalisant le greffage de motifs saccharidiques sur un élastomère de silicone époxydée. De manière surprenante, on a constaté que l'on peut ainsi atteindre les objectifs de mouillabilité et de persistance de la mouillabilité, sans entrave aux qualités mécaniques avantageuses des silicones, sans devoir faire intervenir aucune pollution par des charges minérales qui porteraient atteinte à la transparence du matériau, et sans être gêné, dans les propriétés des articles, et même dans les opérations de mise en forme par moulage, par les propriétés d'adhérence qui sont habituellement la raison d'être même des silicones époxydées.

Ainsi donc l'invention a pour objet un élastomère de silicones constituant un matériau biocompatible mouillable, caractérisé en ce qu'il provient de la réticulation d'un composition organopolysiloxane époxydée et en ce qu'il comporte des motifs de composés saccharidiques greffés en surface sur des fonctions époxy de ladite composition. Cet élastomère peut avantageusement être en outre caractérisé en ce que dans sa masse, ladite composition renferme des fonctions époxy dans une proportion comprise entre 0,05 et 15 milliéquivalents pour 100 g du poids total de ses constituants.

L'invention a également pour objet une composition organopolysiloxane pour la fabrication d'un tel élastomère, caractérisée ce qu'elle comporte au moins un constituant organopolysiloxane et au moins un constituant organohydrogénopolysiloxane, comprenant chacun respectivement au moins, soit des groupes vinyle, soit des groupes SiH, et en ce que l'un au moins desdits constituants porte des fonctions époxy, présentes dans la proportion de 0,05 à 15 milliéquivalents de fonctions époxy pour 100 g du poids total desdits constituants.

Dans une forme de réalisation préférée, la présente invention a pour objet un élastomère de silicones provenant de la réticulation d'une composition organopolysiloxane comportant :

- en constituant organopolysiloxane A) au moins une huile diorganopolysiloxane comportant au moins deux groupes vinyldiorganosiloxy ;
- en constituant organopolysiloxane B) au moins une résine organopolysiloxane, solide à température ambiante, comportant des motifs de formule $R_3$ Si $O_{0,05}$ et Si $O_2$ dans lesquels R est choisi parmi les radicaux méthyle, éthyle, n-propyle, phényle et vinyle, résine dans laquelle, d'une part le rapport molaire des unités de formule $R_3$ Si $O_{0,5}$ aux unités de formule Si $O_2$ est compris entre 0,5 et 1, et d'autre part 1,5 à 10 moles % d'atomes de silicium comportent un radical vinyle directement lié à l'atome de silicium ;
- en constituant siloxane C) au moins une huile ou une résine liquide organohydrogénopolysiloxane à fonctions époxy présentant au moins deux groupes Si H par molécule ;
- en constituant D) une quantité catalytiquement efficace d'un catalyseur à base d'un métal,

ledit élastomère comportant au moins à sa surface des composés saccharidiques E) greffés sur des fonctions époxy, après mise en forme et durcissement dudit élastomère.

La composition selon l'invention est de préférence exempte de charges minérales de manière à ne pas porter atteinte à la transparence de l'élastomère de silicones. On y remplace ces charges minérales par la résine organopolysiloxane solide B) de manière à ce que l'élastomère ait de bonnes propriétés mécaniques sans nuire à ses propriétés optiques de transparence.

De préférence, la résine organopolysiloxane B) contient en outre un motif de formule $R_2$ SiO, présent de préférence de telle sorte qu'il existe de 1 à 10 moles % de motifs de formule $R_2$ SiO par rapport au nombre de moles total de motifs siloxane présents dans le composé B).

Dans une première caractéristique d'un forme particulière de réalisation de l'invention, l'huile diorganosiloxane A) est bloquée à chaque extrémité de sa chaîne par un motif vinyldiorganosiloxy, les radicaux organiques liés aux atomes de silicium y sont choisis parmi les radicaux méthyle, éthyle, n-propyle et phényle, et sa viscosité est comprise entre 100 et 300 000 mPa. s à 25 °C.

Selon d'autres caractéristiques d'une forme particulière de réalisation de l'invention, qui sont appliquées séparément ou en combinaison, l'huile ou résine liquide organohydrogénopolysiloxane C) à fonction époxy présente au moins trois groupes SiH par molécule, les radicaux organiques liés aux atomes de silicium sont choisis parmi les radicaux méthyle, éthyle, n-propyle, phényle et époxy, et elle est utilisée dans la composition en quantité telle qu'il y ait de 0,5 à 2 moles de groupe SiH par mole de groupe vinyle provenant des constituants (A) et (B), et de 0,05 à 15 milliéquivalents de fonctions époxy pour 100 g du poids total des constituants.

De préférence, le constituant organohydrogénopolysiloxane C) est issu d'un polymère liquide C1) répondant à la formule moyenne $R_X$ $H_Y$ $SiO_{4-X-Y/2}$ dans laquelle X est un nombre de 1 à 1,99, Y est un nombre de 0,1 à 1, de préférence de 0,2 à 0,95, la somme X + Y représente un nombre de 1,7 à 2,6, de préférence 1,75 à 2,55, R ayant la même définition donnée par (C).

Des résultats particulièrement avantageux sont obtenus avec un polymère liquide (C1) de structure ramifiée présentant les motifs de formule $CH_3H$ Si $O_{0,5}$ et Si $O_2$ suivant un rapport molaire M'/Q voisin de 2.

Le composé métallique du catalyseur D) est choisi de préférence parmi les métaux suivants : platine, palladium, nickel, rhodium, ruthénium.

En ce qui concerne les composés saccharidiques à greffer, on dispose d'un choix très vaste, tous les sucres pouvant convenir. Il est aisément possible d'y sélectionner ceux qui correspondent au mieux au milieu d'utilisation des articles fabriqués, par exemple pour des lentilles de contact, ceux dont la molécule est proche du modèle naturel des mucopolysaccharides de l'épithélium cornéen.

Il peut s'agir de monosaccharides ou de disaccharides, ou encore de polysaccharides plus ou moins complexes que l'on utilisera soit seuls, soit en mélange.

On peut notamment citer :

. comme monosaccharides : glucose, mannose, galactose, fructose, et leurs dérivés tels que : glucosamine, galactosamine, glucosamine sulfate, n-acétylglucosamine, n-acéthylgalactosamine, acide glucoronique, acide galacturonique, acide acétylneuraminique,

. comme disaccharides : saccharose, maltose, cellobiose, lactose, chondrosine,

. comme autres polysaccharides : amidon, acide alginique, acide hyalorunique, chondroïtine.

Parmi tous ces composés, l'acide glucoronique est particulièrement intéressant.

Les mucopolysaccharides acides sont des constituants importants des revêtements cellulaires et des liquides intercellulaires.

C'est ainsi que la chondroïtine que l'on rencontre dans la cornée est constituée d'enchaînements d'acide glucoronique et n-acétylgalactosamine. De même l'acide hyaluronique bien connu en chirurgie ophtalmologique est formé d'enchaînements d'acide glucuronique et de n-acétylglucosamine.

La présente invention a également pour objet un procédé de fabrication d'articles tels que des lentilles de contact.

Pour réaliser ces articles, on réticule la composition organopolysiloxane dans un moule fermé.

La mise en forme de la composition s'effectue aisément par moulage, le durcissement par réaction des groupes SiH et vinyle étant provoqué par un catalyseur choisi parmi ceux indiqués ci-avant, avec éventuellement chauffage à température modérée.

Dans cette étape du procédé de l'invention, on utilise de préférence pour la mise en oeuvre de la composition, un moule en résine de polyamide. On a d'autre part intérêt à concevoir un tel moule directement à la forme des articles à réaliser, de manière à éviter des opérations d'usinage sur l'élastomère. De ce point de vue, des moules particulièrement appropriés à la fabrication de lentilles de contact comportent un moule convexe, un moule concave et éventuellement un joint annulaire spécial, comme il est décrit dans le brevet européen 0003695.

Des compositions de silicones comportant au moins trois constituants du type des constituants siloxanes (A), (B) et (C) ci-avant, mais à l'exclusion de toute fonction époxy, sont déjà connues, comme il est décrit en particulier dans les brevets US 3 284 406 et 3 436 366, aux enseignements desquels ou pourra se référer. D'autres compositions comportant un organopolysiloxane bloqué en bout de chaîne par des groupes vinyle et un organohydrogénopolysiloxane porteur de fonctions époxy sont décrites par ailleurs dans les brevets américains US 3 996 195 et 4 077 943, auxquels on pourra également se reporter. Dans le second, la composition peut aussi comprendre un organopolysiloxane à chaîne linéaire portant au moins un groupe vinyle par molécule, directement lié à un atome de silicium, de préférence mais non nécessairement en bout de chaîne. Mais dans l'un et l'autre cas, il s'agit de compositions de collage et la proportion des fonctions époxy est importante par rapport à ce qui est préconisé dans le cadre de la présente invention.

On a en effet trouvé conformément à la présente invention, de façon surprenante et inattendue, que des teneurs relativement faibles en fonctions époxy permettent une mise en forme facile par moulage alors qu'elles sont suffisantes néanmoins pour que l'on puisse conférer au matériau obtenu une hydrophilie satisfaisante, le rendant largement biocompatible, et fort utile dans le domaine des lentilles de contact.

Les lentilles de contact moulées ainsi réalisées en élastomère de silicones suivant l'invention sont ensuite mises dans une solution aqueuse d'au moins un des composés saccharidiques mentionnés ci-avant à une teneur comprise entre 5 et 50 % en poids, lesdites lentilles étant maintenues immergées dans cette solution, par exemple pendant 1 à 5 heures à une température de l'ordre de 60 à 90 °C, selon une procédure décrite par Sundberg et Porath (J. Chromatogr. 90 87-1974).

On assure ainsi le greffage des composés saccharidiques sur les groupements époxy de l'élastomère de silicones.

Il est remarquable de constater qu'alors que les auteurs ci-dessus décrivent un mode de greffage en milieu basique, dans le cas de l'acide glucuronique, il faut au contraire opérer en milieu acide à pH compris entre 3 et 4 pour obtenir le meilleur résultat.

Après cette opération de greffage, les lentilles en élastomère de silicones sont lavées dans de l'eau distillée à l'ébullition et sont ensuite immergées dans une solution de sérum physiologique isotonique afin de les rendre mouillables et de pouvoir ainsi les utiliser comme lentilles de contact.

Dans la description et les exemples qui vont suivre aussi bien que dans ce qui précède, les parties et pourcentages indiqués sont exprimés en poids sauf indications contraires.

Dans ces exemples, l'huile diorganopolysiloxanique (A), de viscosité 100 à 300 000 mPa.s à 25 °C, de préférence 600 à 200 000 mPa.s à 25 °C, est un polymère linéaire, constitué d'une succession de motifs diorganosiloxy bloqués en bout de chaîne par un motif vinyldiorganosiloxy. Les radicaux organiques liés aux atomes de silicium du polymère sont choisis parmi les radicaux méthyle, éthyle, n-propyle, phényle, trifluoro-3,3,3 propyle. De préférence, au moins 90 % molaire de ces radicaux sont des radicaux méthyle, au plus 10 % molaire sont des radicaux phényle.

A titre d'exemples concrets de motifs diorganosiloxy, peuvent être cités ceux de formules :
$(CH_3)_2SiO$, $CH_3(C_6H_5)SiO$, $(C_6H_5)_2SiO$, ou $CH_3(n.C_3H_7)SiO$, $CH_3(C_6H_5)SiO$.

De préférence on utilise un huile diméthylpolysiloxane bloquée à chaque extrémité de sa chaîne par un motif diméthylvinylsiloxy ou un motif méthylphénylvinylsiloxy, de viscosité 300 à 150 000 mPa.s à 25 °C.

L'huile vinylée (A) définie ci-dessus est commercialisée par les fabricants de silicones. Par ailleurs, sa fabrication peut être réalisée par exemple, en polycondensant et réarrangeant, en présence d'un catalyseur, le produit d'hydrolyse d'un mélange constitué d'un diorganovinylchlorosilane et d'un diorganodichlorosilane. Elle peut être réalisée encore par polymérisation d'un diorganocyclopolysiloxane, tel que l'octaméthylcyclotétrasiloxane, à l'aide d'un catalyseur alcalin ou acide, en présence d'un quantité appropriée d'un bloqueur de chaîne tel que celui de formule :

$$R(CH_2=CH)CH_3SiO\,[Si\,(CH_3)_2\,O]_n\,SiCH_3\,(CH=CH_2)R$$

R étant un radical méthyle ou phényle et n étant un nombre quelconque de 0 à 20.

Après atteinte de l'équilibre de la réaction de polymérisation, on neutralise le catalyseur et on élimine par distillation les composés volatiles.

On peut utiliser l'huile (A) seule ou sous la forme d'un mélange d'huiles (A) qui se différencient les unes des autres par la valeur de leur viscosité. On peut également, dans la mesure où les compositions sont conditionnées en deux composants, introduire une huile de viscosité relativement faible, par exemple 300 à 20 000 mPa.s à 25 °C, dans l'un des deux composants, et une autre de viscosité plus élevée, par exemple de 60 000 à 150 000 mPa.s à 25 °C, dans l'autre composant. Ce processus permet de régler la viscosité des deux composants de manière appropriée.

Des copolymères résineux utilisables en constituant siloxanique (B) dans le cadre de la présente invention sont décrits en détail dans les brevets américains US A 2 486 162, US A 3 284 406 et 3 436 366, dont le contenu servira ici de référence. Ils sont par ailleurs commercialisés par les fabricants de silicones.

Les compositions selon l'invention comportent de préférence, pour 100 parties en poids de polymère (A), de 5 à 70 parties en poids de résine (B).

Quant au constituant organohydrogénopolysiloxane (C) à fonction époxy, on peut le préparer au prélable par réaction d'hydrosilylation partielle entre un organohydrogénopolysiloxane correspondant non époxydé ($C_1$) et un composé organique ou organosilicié ($C_2$) comportant une insaturation éthylénique et au moins un groupe époxy, en présence d'un catalyseur à base d'un métal du groupe du platine analogue à (D), ou d'un peroxyde organique, ou encore de lumière ultraviolette comme décrit par exemple dans le brevet français FR-1-1 185 009.

L'organohydrogénopolysiloxane ($C_1$) compose alors avantageusement au moins trois groupes SiH par molécule, qui seront partiellement remplacés par les radicaux porteur des fonctions époxy. L'organohydrogénosiloxane ($C_1$) répondant à la définition donnée ci-dessus, peut être un homopolymère, un copolymère ou leurs mélanges, contenant des motifs polysiloxane de formules :
$RSiO_{1,5}$, $R_2SiO$, $R_3SiO_{0,5}$, $SiO_2$, ou $RHSiO$, $HSiO_{1,5}$, $RHSiO_{0,5}$ dans lesquelles le radical organique R a la signification donnée pour le composé (C) ci-dessus.

Ainsi le produit ($C_1$) peut être un polymère liquide organohydrogénopolysiloxane ayant au moins trois groupes SiH par molécule, ce polymère répondant à la formule moyenne $R_XH_YSiO_{4-X-Y/2}$ dans laquelle X est un nombre de 1 à 1,99, de préférence de 1,05 à 1,95, et Y est un nombre de 0,1 à 1, de préférence de 0,2 à 0,95, la somme X + Y représente un nombre de 1,7 à 2,6, de préférence 1,75 à 2,55, et R représente un radical méthyle, éthyle, n-propyle, phényle, de préférence au moins 80 % des radicaux R étant des radicaux méthyle. La formule ci-avant englobe les polymères ($C_1$) présentant une structure linéaire, cyclique, ou ramifiée.

Un polymère ($C_1$) de structure linéaire peut répondre à la formule moyenne :

$R_{(3-t)}H_tSi[OSiR_2]_g[OSiRH]_n\ OSiH_tR_{(3-t)}$

dans laquelle t est le nombre 0 ou 1, g est un nombre de 0 à 50, h est un nombre de 3 à 90 et R a la même signification que celle donnée ci-dessus pour le produit ($C_1$).

De préférence, on utilise un polymère de structure linéaire répondant à la formule moyenne :

$(CH_3)_3Si[OSi(CH_3)_2]_g[OSi(CH_3)H]_hOSi(CH_3)_3$

dans laquelle g et h ont la signification ci-avant.

Un polymère ($C_1$) de structure cyclique peut répondre à la formule moyenne :

$[OSiRH]_{n1}\ [OSiR_2]_{n2}$,

dans laquelle n1 est un nombre de 3 à 10, n2 est un nombre de 0 à 5 et R a la même signification que celle donnée précédemment.

De préférence, un polymère ($C_1$) de structure cyclique répond à la formule $[OSi\ (CH_3)H]_4$ ou à la formule $[OSi(CH_3)H]_3$.

Un polymère ($C_1$) de structure ramifiée renferme avantageusement au moins un motif de formules $RSiO_{1,5}$, $SiO_2$, $HSiO_{1,5}$, les autres motifs étant choisis dans le groupe de ceux de formules :

$R_3SiO_{0,5}$, $HR_2SiO_{0,5}$, $R_2SiO$, $H(R)\ SiO$,

R ayant toujours la même signification que celle donnée précédemment.

Un polymère ayant une structure ramifiée bien déterminée peut répondre à la formule moyenne :

$P_WSi[OSiR_2H]_{W'}\ [(OSiR_3)_{W''}]_{4-W}$

dans laquelle :

R′ représente R ou H (R ayant toujours la même signification), W est le nombre 0 ou 1, W′ est le nombre 2, 3 ou4, W″ est le nombre 0 ou 1, W′ + W″ représente le nombre 3 ou 4,

avec toutefois :

lorsque W est zéro, W′ est le nombre 3 ou 4,

lorsque W est 1 et R′ représente H, W′ est le nombre 2 ou 3,

lorsque W est 1 et R′ représente R, W′ est le nombre 3.

De préférence, on choisit comme produit ($C_1$) un polymère de structure ramifiée présentant les motifs de formule $(CH_3)_2\ H\ SiO_{0,5}$ et $SiO_2$ suivant un rapport molaire M′/Q voisin de 2, dont la préparation est décrite dans le brevet américain 2 915 497.

D'autres exemples d'organohydrogénopolysiloxanes ($C_1$) utilisables dans les compositions selon la présente invention sont également décrits dans les brevets américains US-A-3 284 406, 3 436 366 cités comme référence.

Les composés époxydés à insaturation éthylénique ($C_2$) sont bien connus de l'homme de métier.

Essentiellement pour des raisons de facilité d'approvisionnement, on utilise de préférence comme composé ($C_2$) ceux de formule :

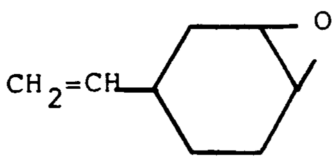

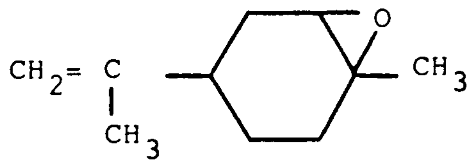

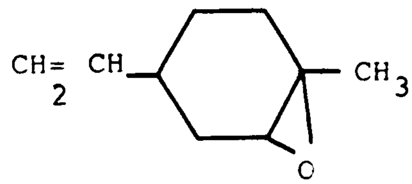

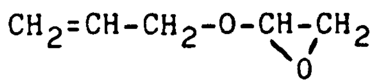

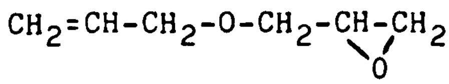

Des organohydrogénopolysiloxanes époxydés (C) et leur procédé de préparation sont par ailleurs décrits dans les brevets américains US-A-3 996 195, US-A-4 077 943, le brevet français FR-A-1 345 921, le brevet allemand DE-A-1 272 550 et le brevet français FR-A-2 526 800, cités comme référence.

On notera que des compositions selon l'invention peuvent contenir en constituant (C) à la fois un organohydrogéno-polysiloxane époxydé et un organohydrogéno-polysiloxe de type ($C_1$) sans fonction époxy, l'ensemble du constituant (C) étant présent dans la composition en quantité telle qu'il y ait 0,5 à 2 moles, de préférence 1 à 1,5 moles de groupes SiH par mole de groupe vinyle provenant des composés (A) et (B), et la partie époxydée étant présente dans la proportion de 0,05 à 15 milliéquivalents, de préférence de 0,1 à 6 milliéquivalents de fonctions époxy pour 100 g de (A) + (B) + (C).

Le métal du constituant catalyseur (D) est de préférence le platine.

Un tel catalyseur au platine (D) est généralement introduit de manière à fournir de 1 à 500 ppm (partie par million), de préférence de 5 à 80 ppm de platine, exprimé en métal, par rapport à l'huile vinylée (A).

De préférence, on utilise un catalyseur non supporté, choisi parmi l'acide chloroplatinique, sa forme hexahydratée, ses sels alcalins, ses complexes avec les dérivés organiques.

En particulier, sont recommandés les produits de la réaction de l'acide chloroplatinique avec des vinylpolysiloxanes, tels que le divinyl-1,3 tétraméthyl-disiloxane, traités ou non avec un agent alcalin pour éliminer partiellement ou totalement les atomes de chlore (brevets américains 3 419 593, 3 775 452 et 3 814 730). Sont recommandés également les produits de la réaction de l'acide chloroplatinique avec des alcools, éthers, aldéhydes (brevet américain 3 220 972).

D'autre catalyseurs efficaces comprennent les chélates de platine et les complexes du chlorure platineux avec des phosphines, des oxydes de phosphines, des oléfines comme l'éthylène, le propylène, le styrène (brevets américains 3 159 610 et 3 552 327).

La préparation des compositions selon l'invention peut avoir lieu par simple mélange des divers constituants (A), (B), (C), (D) dans un ordre quelconque d'introduction, à l'aide d'appareillages appropriés. Il est toutefois souhaitable d'ajouter en dernier, le catalyseur au platine (D) ou l'organohydrogénopolysiloxane à fonctions époxy (C).

Les compositions ainsi formées peuvent durcir dès la température ambiante, ou par chauffage à une température comprise entre la température ambiante et 200 °C, pendant une durée comprise entre 2 à 30 minutes.

Pour certaines compositions qui durcissent immédiatement à température ambiante, il peut être utile de les stabiliser et de les conditionner sous forme de compositions monocomposantes, qui présentent une durée de "vie en pot" supérieure à un jour. Ceci peut être obtenu en ajoutant un inhibiteur au catalyseur au

platine (D). De tels inhibiteurs sont bien connus ; en particulier on peut citer les amines, les silazanes, les oximes, les diesters de diacides carboxyliques, les alcools acétyléniques, les cétones acétyléniques, les vinylméthylcyclopolysiloxanes (brevets américains 3 445 420 et 3 989 667). L'inhibiteur est avantageusement utilisé à raison de 0,005 à 5 parties, de préférence 0,01 à 3 parties pour 100 parties de l'huile vinylée (A).

Les compositions renfermant un inhibiteur peuvent être stables pendant plusieurs jours à la température ambiante. Pour obtenir les élastomères au moment désiré, on chauffe les compositions au dessus de 60 °C, de préférence au dessus de 100 °C. Cependant ce mode opératoire est contraignant. Aussi, dans la majorité des cas, on conditionne les compositions conformes à l'invention en deux ou trois composants ; l'inhibiteur est absent ou bien il est ajouté à faible dose dans le but de régler le temps de durcissement.

L'un des composants peut être constitué par exemple d'une fraction des huiles vinylées (A), de la résine (B), de la totalité du catalyseur (D). L'autre composant est alors constitué de la fraction restante des huiles vinylées (A) et de la totalité de l'hydrogénoorganopolysiloxane à fonction époxy (C).

On peut agir de diverses manières sur les quantités mises en jeu des divers constituants et sur la viscosité des polymères pour préparer deux composants dont les viscosités ne sont pas très élevées, par exemple au plus 20 000 mPa.s à 25 °C, de sorte qu'ils sont faciles à mélanger au moment du moulage. Il est recommandé cependant de mettre dans l'un des composants, la totalité du catalyseur au platine (D), et dans l'autre, la totalité du polymère organohydrogénopolysiloxanique à fonction époxy (C).

Les exemples ci-après, nullement limitatifs, illustrent la constitution, la préparation et l'emploi de compositions selon l'invention dans la fabrication de lentilles de contact.

**EXEMPLE 1**

On prépare une composition de résine de silicones en deux parties 1 et 2.

- Préparation de la partie 1 :

On mélange dans un malaxeur :

- 60 parties d'huile vinylée ($A_1$) de type diméthylpolysiloxane bloquée à chacune de ses extrémités par un motif vinyldiméthylsiloxy, de viscosité 600 mPa.s à 25 °C ;
- 40 parties d'excipients secs, d'une résine vinylée ($B_1$) présentant 53,5 % molaire de motifs $SiO_2$, 6 % molaire de motifs $(CH_3)(CH_2=CH)SiO$ et 40 % molaire de motifs $(CH_3)_3SiO_{0,5}$ ;
- 20 parties (calculées en platine métal) par millions de parties d'huile vinylée ($A_1$) d'une solution catalytique ($D_1$) préparée par mélange à température ambiante de 0,6 partie d'acide chloroplatinique, 10 parties d'isopropanol, 55 parties de xylène et 6 parties de tétraméthyl-1,1,3,3 divinyl-1,3 disiloxane.

- Préparation de la partie 2 :

On mélange dans un malaxeur :

- 4,05 parties d'une résine silicone liquide hydrogénée ($C_1$) préparée par hydrolyse de silicate technique $Si(OC_2H_5)_4$ et de $(CH_3)_2HSiCl$ en des quantités correspondant à 1 mole de $SiO_2$ pour 2 moles de $(CH_3)_2HSiCl$ en solution dans le toluène. Cette résine présente donc un rapport molaire théorique de motifs $(CH_3)HSiO_{0,5}/SiO_2 = 2$ et un rapport molaire réel de 2,23.
- 0,8 partie d'un polymère de formule ;

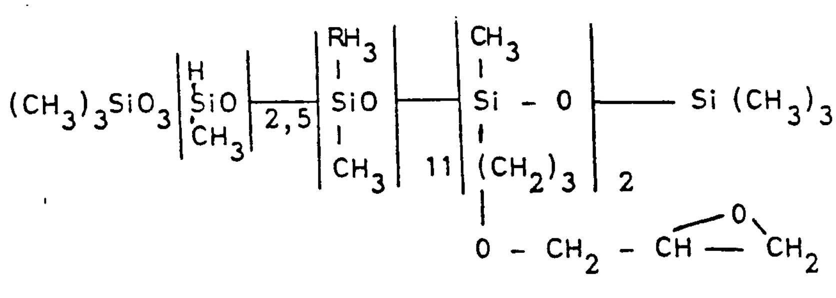

La composition présente un rapport SiH/SiVi de 1,17 et une teneur en époxy de 1,12 m eq pour 100 g de composition (Vi désignant le radical vinyle).

On mélange les parties 1 et 2. La réticulation débute dès la température ambiante.

Après moulage, on complète la réticulation par passage en étuve ventilée 4 heures à 60 °C puis 2 heures à 100 °C.

La dureté shore A DSA est de 45, le retrait linéaire RL est d'environ 0,1 %, la résistance à la rupture R/R est de 0,5 MPa (norme NF -T- 4600Z) l'allongement à la rupture (A/R) est de 100 % (norme NF -T-4600Z), la résistance à la déchirure est de 1,5 le k N/m.

**EXEMPLE 2**

On prépare la composition de silicones en deux parties 1 et 2.

- Préparation de la partie 1 :

On mélange dans un malaxeur :

- 68 parties de l'huile vinylée ($A_1$) de l'exemple 1,
- 32 parties de la résine vinylée ($B_1$) de l'exemple 1,
- 20 ppm de la solution de catalyseur ($D_1$) par rapport à ($A_1$).

- Préparation de la partie 2 :

On mélange dans un malaxeur :

- 6 parties d'une résine de silicone liquide hydrogénée et époxydée ($C_3$) obtenue par hydrosilylation de l'allylglycidyléther par la résine ($C_1$) de l'exemple 1 et titrant 97,6 m.eq. de fonctions époxy et 732 m.eq. de fonctions SiH par 100 g de ($C_3$).

La composition présente un rapport SiH/SiVi de 1,18 et une teneur en fonctions époxy de 5,52 m.eq. pour 100 g de ($A_1$) + ($B_1$) + ($C_3$).

On procède ensuite exactement comme à l'exemple 1. Les propriétés mécaniques obtenues sont les suivantes :

| | |
|---|---|
| DSA | 41 |
| R/R | 1,20 MPa |
| A/R | 94 % |

**EXEMPLE 3**

On répète le mode opératoire de l'exemple 2 sauf que l'on fait varier la quantité de ($C_3$), la partie 1 restant inchangée. Les résultats obtenus sont rassemblés ci-après pour le cas où l'on utilise 6,4 parties de ($C_3$) :

| | |
|---|---|
| SiH/SiVi | 1,26 |
| Epoxy | 5,9 m.eq. pour 100 g ($A_1$) + ($B_1$) + ($C_3$) |
| DSA | 48 |
| R/R | 0,34 MPa |
| A/R | 76 % |

**EXEMPLE 4**

On procède comme dans l'exemple 3, mais avec 5 parties de ($C_3$). On obtient les résultats suivants :

| | |
|---|---|
| SiH/SiVi | 1,0 |
| Epxoy | 4,9 m.eq. pour 100 g ($A_1$) + ($B_1$) + ($C_3$) |
| DSA | 33 |
| R/R | 0,66 MPa |
| A/R | 118 % |

**EXEMPLE 5**

On répète le mode opératoire de l'exemple 2, la partie 1 restant inchangée et la partie 2 étant constituée par 5 parties d'une résine silicone liquide hydrogénée et époxydée ($C_4$) obtenue par hydrosilylation de l'allylglycidyléther par la résine ($C_1$) de l'exemple 1 et titrant 48 m.eq de fonctions époxy et 847 m.eq de fonctions SiH pour 100 g de ($C_3$).

La composition présente un rapport SiH/SiVi de 1,2 et une teneur en fonctions époxy de 2,4 m.eq pour 100 g de ($A_1$) + ($B_1$) + ($C_4$).

Les propriétés mécaniques obtenues sont les suivantes :

| | |
|---|---|
| DSA | 38 |
| R/R | 0,61 MPa |
| A/R | 94 % |

**EXEMPLE 6**

On introduit une composition de silicone préparée conformément à l'exemple 1 dans des moules en résine de polyamide du type connu sous la dénomination commerciale RILSAN, à la forme de lentilles de contact.

On polymérise la composition par passage en étuve pendant 4 h à 60 °C, puis 2 h à 100 °C.

On démoule les lentilles obtenues.

On extrait de ces lentilles les parties non polymérisées au moyen de chlorure de méthylène.

On immerge les lentilles dans une solution à 10 % dans l'eau d'acide glucoronique, la solution étant à pH acide compris entre 3 et 4.

On chauffe l'ensemble pendant 2 h à 80 °C.

On lave ensuite les lentilles dans de l'eau à ébullition pendant environ 15 minutes.

On immerge enfin les lentilles dans une solution de sérum physiologique isotonique afin de les rendre mouillables en surface par le liquide lacrymal.

La quantité de sucre greffé à l'élastomère de silicones est indécelable par des méthodes usuelles d'analyse. On peut cependant l'estimer à $10^{-6}$ à $10^{-8}$ moles par lentille. Ceci suffit après hydratation dans la solution de sérum isotonique à rendre la lentille parfaitement bien mouillable sur l'œil.

Les propriétés mécaniques et optiques de l'élastomère de silicone sont inchangées après la réaction de greffage. De même, il n'est pas observé de diminution significative de la perméabilité.

Les lentilles peuvent être portées en port journalier pendant plusieurs mois sans altération de leurs propriétés et en particulier sans perte de mouillabilité.

**EXEMPLE 7**

Des résultats identiques à ceux de l'exemple 6 sont obtenus en procédant de manière analogue à partir de compositions de silicones préparées conformément à chacun des exemples 2 à 5.

## Revendications

1. Elastomère de silicone constituant un matériau biocompatible mouillable, caractérisé en ce qu'il est constitué dans sa masse par un élastomère de silicone provenant de la réticulation d'une composition d'organopolysiloxane époxydée comportant au moins un constituant d'organopolysiloxane à fonctions vinyle et au moins un constituant hydrogénopolysiloxane à fonctions SiH, l'un au moins desdits constituants présentant en outre des fonctions époxy, et en ce qu'il comporte en surface des motifs de composés saccharidiques greffés sur des fonctions époxy de ladite composition.

2. Elastomère selon la revendication 1, caractérisé en ce que dans sa masse, ladite composition renferme des fonctions époxy dans une proportion comprise entre 0,05 à 15 milliéquivalents pour 100 g du poids total de ses constituants.

3. Composition organopolysiloxane époxydée pour la fabrication d'un élastomère selon la revendication 1 ou 2, caractérisée en ce qu'elle comporte au moins un constituant organopolysiloxane comportant au moins des groupes vinyl et au moins un constituant organohydrogénopolysiloxane comportant au moins des groupes SiH, et en ce que l'un au moins desdits constituants porte des fonctions époxy, présentes dans la proportion de 0,05 à 15 milliéquivalents de fonctions époxy pour 100 g du poids total desdits constituants.

4. Elastomère de silicones provenant de la réticulation d'une composition organopolysiloxane époxydée exempte de charges minérales et comportant :
   - en constituant organopolysiloxane A) au moins une huile diorganopolysiloxane comportant au moins deux groupes vinyldiorganosiloxy ;
   - en constituant organopolysiloxane B) au moins une résine organopolysiloxane, solide à température ambiante, comportant des motifs de formules $R_3SiO_{0,5}$ et $SiO_2$, dans lesquels R est choisi parmi les radicaux méthyle, éthyle, n-propyle, phényle et vinyle, résine dans laquelle, d'une part le rapport molaire des unités de formule $R_3SiO_{0,5}$ aux unités de formule $SiO_2$ est compris entre 0,5 et 1, et d'autre part, 1,5 à 10 moles % d'atomes de silicium comportent un radical vinyle directement lié à l'atome de silicium ;
   - en constituant siloxane (C) au moins une huile ou une résine liquide organohydrogénopolysiloxane à fonctions époxy présentant au moins deux groupes SiH par molécule.
   - en constituant D) une quantité catalytiquement efficace d'un catalyseur à base d'un métal.

   ledit élastomère comportant au moins à sa surface des composés saccharidiques E) greffés sur des fonctions époxy.

5. Elastomère de silicones selon la revendication 4, caractérisé en ce que l'huile diorganosiloxane A) est bloquée à chaque extrémité de sa chaîne par un motif vinyldiorganosiloxy, en ce que les radicaux organiques liés aux atomes de silicium sont choisis parmi les radicaux méthyle, éthyle, n-propyle et phényle, et en ce que sa viscosité est comprise entre 100 et 300 000 mPa.s à 25 °C.

6. Elastomère de silicones selon la revendication 4 ou 5, caractérisé en ce que la résine organopolysiloxane B) contient en outre un motif de formule $R_2SiO$, présent de préférence de telle sorte qu'il existe de 1 à 10 mole % de motif de formule $R_2SiO$ par rapport au nombre de moles total de motifs siloxane présents dans la résine B).

7. Elastomère de silicones selon la revendication 4, 5 ou 6, caractérisé en ce que pour l'huile ou résine liquide organohydrogénopolysiloxane C) à fonction époxy présente au moins deux groupes Si H par molécule, les radicaux organiques liés aux atomes de silicium sont choisis parmi les radicaux méthyle, éthyle, n-propyle, phényle et époxy, et elle est utilisée dans la composition en quantité telle qu'il y ait de 0,5 à 2 moles de groupe Si H par mole de groupe vinyle provenant des constituants (A) et (B) et de 0,05 à 15 milliéquivalents de fonctions époxy pour 100 g du poids total des constituants.

8. Elastomère de silicones selon la revendication 7, caractérisé en ce que le constituant siloxane C) est issu d'un polymère liquide C1) répondant à la formule moyenne $R_X\,H_Y\,Si\,O_{4-X-Y/2}$ dans laquelle X est un nombre de 1 à 1,99, Y est un nombre de 0,1 à 1, de préférence de 0,2 à 0,95, la somme de X + Y représente un nombre de 1,7 à 2,6, de préférence 1,75 à 2,55, R ayant la définition donnée pour C.

9. Elastomère de silicones selon la revendication 8, caractérisé en ce que le polymère liquide C1) est un polymère de structure ramifiée présentant les motifs de formule $CH_3$ H Si $O_{0,5}$ et Si $O_2$ suivant un rapport molaire M'/Q voisin de 2.

10. Elastomère de silicones selon l'une quelconque des revendications 4 à 9, caractérisé en ce que les composés saccharidiques E) greffés sur les groupements époxy sont choisis parmi les composés suivants : glucose, mannose, galactose, fructose, et leurs dérivés tels que : glucosamine, galactosamine, glucosamine sulfate, n-acéthylglucosamine, n-acétylgalactosamine, acide glucuronique, acide galacturonique, acide acétylneuraminique ; saccharose, maltose, cellobiose, lactose, chondrosine ; amidon, acide alginique, acide hyaluronique, chondroïtine.

11. Elastomère de silicones selon l'une quelconque des revendications 4 à 10, caractérisé en ce que le composé métallique du catalyseur (D) est choisi parmi les métaux suivants : platine, palladium, nickel, rhodium, ruthénium.

12. Procédé de fabrication d'articles tels que des lentilles de contact, en un élastomère de silicones selon l'une quelconque des revendications 1, 2, 4 à 11, caractérisé en ce qu'il comporte une étape de mise en forme et de durcissement de la composition organopolysiloxane époxydée, puis la mise en contact de l'élastomère ainsi obtenu avec au moins un composé saccharidique qui se greffe sur des fonctions époxy dudit élastomère.

13. Procédé selon la revendication 12, caractérisé en ce que ladite étape de mise en forme est réalisée par moulage, et en ce que l'article ainsi obtenu est mis en contact avec une solution aqueuse d'au moins un desdits composés saccharidiques pour provoquer son greffage en surface dans une proportion propre à pouvoir rendre ultérieurement ledit article mouillable.

14. Procédé selon l'une des revendications 12 ou 13, caractérisé en ce que la solution aqueuse comporte l'acide glucoronique comme composé saccharidique et en ce que ladite solution a un pH acide compris entre 3 et 4.

15. Procédé suivant la revendication 13 ou 14, caractérisé en ce que l'article est rendu mouillable par immersion dans une solution de sérum physiologique iosotonique.

## Claims

1. A silicone elastomer consisting of a wettable biocompatible material, characterized in that it consists in its mass of a silicone elastomer resulting from the crosslinking of an epoxidized organopolysiloxane composition, comprising at least one organopolysiloxane constituent having vinyl functional groups and at least one hydrogenopolysiloxane constituent having SiH functional groups, at least one of the said constituents having in addition epoxy functional groups, and in that it carries on its surface units of saccharidic compounds grafted onto the epoxy groups of the said composition.

2. An elastomer in accordance with Claim 1, characterized in that the mass of the said composition contains epoxy functional groups in a proportion of between 0.05 and 15 milliequivalents per 100 g of the total weight of its constituents.

3. An epoxidized organopolysiloxane composition for the manufacture of an elastomer in accordance with Claims 1 or 2, characterized in that it comprises at least one organopolysiloxane constituent having at least vinyl groups and at least one organohydrogenopolysiloxane constituent comprising at least SiH groups, and in that at least one of the said constituents carries epoxy functional groups, present in a proportion of 0.05 to 15 milliequivalents of epoxy functional groups per 100 g of the total weight of the said constituents.

4. A silicone elastomer produced by crosslinking an epoxidized organopolysiloxane composition free from mineral fillers and comprising;
   - an organopolysiloxane constituent (A) consisting of at least one diorganopolysiloxane oil containing at least two vinyldiorganosiloxy groups;

- an organopolysiloxane constituent (B) consisting of at least one organopolysiloxane resin which is solid at ambient temperature, and has units with the formulae $R_3SiO_{0.5}$ and $SiO_2$, in which R is selected from methyl, ethyl, n-propyl, phenyl and vinyl radicals, in which the resin is such that, on the one hand, the molar ratio of units having the formula $R_3SiO_{0.5}$ to units having the formula $SiO_2$ lies between 0.5 and 1, and on the other hand, 1.5 to 10 mole % of silicon atoms carry a vinyl radical directly linked to the silicon atom ;
- a siloxane constituent (C) consisting of at least one organo-hydrogenopolysiloxane oil or liquid resin with epoxy functional groups having at least two SiH groups per molecule.
- a constituent (D) consisting of a catalytically effective quantity of a metal-based catalyst, the said elastomer having at least on its surface saccharidic compounds (E) grafted onto epoxy functional groups.

**5.** A silicone elastomer in accordance with Claim 4, characterized in that the diorganosiloxane oil (A) is blocked at each end of its chain by a vinyl diorganosiloxy unit, in that the organic radicals linked to the silicon atoms are chosen from methyl, ethyl, n-propyl and phenyl radicals, and in that its viscosity lies between 100 and 300,000 mPa.s at 25 ° C.

**6.** A silicone elastomer in accordance with Claim 4 or 5, characterized in that the organopolysiloxane resin (B) also contains a unit having the formula $R_2SiO$, preferably present in such a way that there exist 1 to 10 mole % of units having the formula $R_2SiO$ with respect to the total number of moles of siloxane units present in the resin (B).

**7.** Silicone elastomer in accordance with claims 4, 5 or 6, characterized in that the organohydrogenopolysiloxane oil or liquid resin (C) with epoxy functional groups, has at least two SiH groups per molecule, the organic radicals linked to the silicon atoms being chosen from methyl, ethyl, n-propyl, phenyl and epoxy radicals, and it is used in the composition in a quantity such that there are 0.5 to 2 moles of the SiH group per mole of the vinyl group derived from the constituents (A) and (B) and 0.05 to 15 milliequivalents of the epoxy functional groups per 100 g of the total weight of the constituents.

**8.** A silicone elastomer in accordance with Claim 7, characterized in that the siloxane constituent (C) is derived from a liquid polymer (C1) corresponding to the mean formula $R_XH_YSiO_{4-X-Y/2}$ in which X is a number from 1 to 1.99, Y is a number from 0.1 to 1, preferably from 0.2 to 0.95 and the sum of X + Y represents a number from 1.7 to 2.6, preferably 1.75 to 2.55, R having the definition given for C.

**9.** A silicone elastomer in accordance with Claim 8, characterized in that the liquid polymer (C1) is a polymer with a branched structure having units with the formula $CH_3HSiO_{0.5}$ and $SiO_2$ in a molar ratio M'/Q in the vicinity of 2.

**10.** A silicone elastomer in accordance with any one of the Claims 4 to 9, characterized in that the saccharidic compounds (E) grafted onto the epoxy groups are chosen from the following compounds : glucose, mannose, galactose, fructose and their derivatives such as : glucosamine, galactosamine, glucosamine sulphate, n-acetylglucosamine, n-acetylgalactosamine, glucuronic acid, galacturonic acid, acetylneuraminic acid ; saccharose, maltose, cellobiose, lactose, chondrosine ; starch, alginic acid, hyaluronic acid chondroitin.

**11.** A silicone elastomer according to any one of Claims 4 to 10, characterized in that the metal catalyst compound (D) is selected from the following metals : platinum, palladium, nickel, rhodium and ruthenium.

**12.** A process for the manufacture of articles such as contact lenses, made from a silicone elastomer in accordance with any one of Claims 1,2, 4 to 11, characterized in that it comprises a stage in which the epoxidized organopolysiloxane composition is shaped and cured and the elastomer thus obtained is put into contact with at least one saccharidic compound which is grafted onto the epoxy functional groups of the said elastomer.

**13.** A process according to Claim 12, characterized in that the said shaping stage is carried out by moulding, and in that the article thus obtained is put into contact with an aqueous solution of at least

one of the said saccharidic compounds in order to bring about surface grafting in a proportion such that the said article may subsequently be made wettable.

**14.** A process in accordance with either of Claims 12 or 13, characterized in that the aqueous solution comprises glucuronic acid as the saccharidic compound and in that the said solution has an acid pH of between 3 and 4.

**15.** A process in accordance with Claim 13 or 14, characterized in that the article is made wettable by immersion in a solution of isotonic physiological saline solution.

**Patentansprüche**

**1.** Silikonelastomer, das ein benetzbares biokompatibles Material darstellt, dadurch gekennzeichnet, daß es in seiner Masse aus einem Silikonelastomer gebildet ist, das von der Vernetzung einer epoxidierten Organopolysiloxanzusammensetzung stammt, welche wenigstens einen Organopolysiloxanbestandteil mit Vinylfunktionen und wenigstens einen Hydrogenopolysiloxanbestandteil mit SiH-Funktionen umfaßt, wobei wenigstens einer dieser Bestandteile außerdem Epoxyfunktionen aufweist und daß es auf der Oberfläche Einheiten von Saccharidverbindungen aufweist, welche auf die Epoxyfunktionen der erwähnten Zusammensetzung gepfropft sind.

**2.** Elastomer nach Anspruch 1, dadurch gekennzeichnet, daß in seiner Masse die erwähnte Zusammensetzung Epoxyfunktionen in einem Anteil von 0,05 bis 15 Milliäquivalenten pro 100 g des Gesamtgewichtes ihrer Bestandteile aufweist.

**3.** Epoxidierte Organopolysiloxan-Zusammensetzung zur Herstellung eines Elastomers nach Anspruch 1 oder 2, dadurch gekennzeichnet, daß sie wenigstens einen Organopolysiloxanbestandteil, der zumindest Vinylgruppen aufweist und wenigstens einen Organohydrogenopolysiloxanbestandteil, der zumindest SiH-Gruppen aufweist, umfaßt und daß wenigstens einer dieser Bestandteile Epoxyfunktionen in einem Anteil von 0,05 bis 15 Milliäquivalenten pro 100 g des Gesamtgewichtes der Bestandteile aufweist.

**4.** Silikonelastomer, das von der Vernetzung einer epoxidierten Organopolysiloxanzusammensetzung, die frei von mineralischen Füllstoffen ist, stammt und das umfaßt:

- als Organopolysiloxanbestandteil A) wenigstens ein Diorganopolysiloxanöl, das wenigstens zwei Vinyldiorganosiloxygruppen aufweist;
- als Organopolysiloxanbestandteil B) wenigstens ein bei Umgebungstemperatur festes Organopolysiloxanharz, das Einheiten der Formeln $R_3SiO_{0,5}$ und $SiO_2$ aufweist, worin R ausgewählt ist unter Methyl-, Ethyl-, n-Propyl-, Phenyl- und Vinylresten, wobei in dem Harz einerseits das Molverhältnis von Einheiten der Formel $R_3SiO_{0,5}$ zu den Einheiten der Formel $SiO_2$ im Bereich von 0,5 bis 1 liegt und andererseits 1,5 bis 10 Mol-% der Siliciumatome einen Vinylrest aufweisen, der direkt an das Siliciumatom gebunden ist;
- als Siloxanbestandteil (C) wenigstens ein flüssiges Organohydrogenpolysiloxanöl oder -harz mit Epoxyfunktionen, das wenigstens zwei SiH-Gruppen pro Molekül aufweist;
- als Bestandteil D) eine katalytisch wirksame Menge eines Katalysators auf Basis eines Metalls,

wobei das Elastomer wenigstens auf seiner Oberfläche Saccharidverbindungen E) aufweist, welche auf die Epoxyfunktionen gepfropft sind.

**5.** Silikonelastomer nach Anspruch 4, dadurch gekennzeichnet, daß das Diorganosiloxanöl A) an beiden Enden der Kette durch eine Vinyldiorganosiloxyeinheit blockiert ist, daß die an die Siliciumatome gebundenen organischen Reste ausgewählt sind unter Methyl-, Ethyl-, n-Propyl- und Phenylresten und daß seine Viskosität bei 25 °C im Bereich von 100 bis 300 000 mPa.s liegt.

**6.** Silikonelastomer nach Anspruch 4 oder 5, dadurch gekennzeichnet, daß das Organopolysiloxanharz B) außerdem eine Einheit der Formel $R_2SiO$ enthält, vorzugsweise derart, daß 1 bis 10 Mol-% der Einheiten der Formel $R_2SiO$, bezogen auf die Gesamtmolzahl der im Harz B) vorliegenden Siloxaneinheiten, vorhanden sind.

**7.** Silikonelastomer nach Anspruch 4, 5 oder 6, dadurch gekennzeichnet, daß bei dem flüssigen Organohydrogenopolysiloxanöl oder -harz C) mit Epoxyfunktionen, das wenigstens zwei SiH-Gruppen pro Molekül aufweist, die an die Siliciumatome gebundenen organischen Reste ausgewählt sind unter Methyl-, Ethyl-, n-Propyl-, Phenyl- und Epoxyresten und daß das Öl oder Harz in der Zusammensetzung in einer solchen Menge vorhanden ist, daß 0,5 bis 2 Mol SiH-Gruppen pro Mol der von den Bestandteilen (A) und (B) stammenden Vinylgruppen und 0,05 bis 15 Milliäquivalente Epoxyfunktionen pro 100 g des Gesamtgewichts der Bestandteile vorhanden sind.

**8.** Silikonelastomer nach Anspruch 7, dadurch gekennzeichnet, daß der Siloxanbestandteil C) von einem flüssigen Polymer C1) der Formel $R_XH_YSiO_{4-X-Y/2}$ stammt, worin X für eine Zahl von 1 bis 1,99 steht, Y für eine Zahl von 0,1 bis 1, vorzugsweise 0,2 bis 0,95 steht, die Summe X + Y eine Zahl von 1,7 bis 2,6, vorzugsweise 1,75 bis 2,55 ist, und R die für C angegebenen Bedeutungen besitzt.

**9.** Silikonelastomer nach Anspruch 8, dadurch gekennzeichnet, daß das flüssige Polymer C1) ein Polymer verzweigter Struktur ist, das Einheiten der Formel $CH_3HSiO_{0,5}$ und $SiO_2$ entsprechend einem an 2 angrenzenden Molverhältnis M'/Q aufweist.

**10.** Silikonelastomer nach einem der Ansprüche 4 bis 9, dadurch gekennzeichnet, daß die auf die Epoxygruppen gepfropften Saccharidverbindungen E) ausgewählt sind unter folgenden Verbindungen: Glucose, Mannose, Galactose, Fructose und ihren Derivaten, wie: Glucosamin, Galactosamin, Glucosaminsulfat, N-Acetylglucosamin, N-Acetylgalactosamin, Glucuronsäure, Galacturonsäure, Acetylneuraminsäure; Saccharose, Maltose, Cellobiose, Lactose, Chondrosin;
Stärke, Alginsäure, Hyaluronsäure, Chondroitin.

**11.** Silikonelastomer nach einem der Ansprüche 4 bis 10, dadurch gekennzeichnet, daß die Metallverbindung des Katalysators (D) ausgewählt ist unter folgenden Metallen: Platin, Palladium, Nickel, Rhodium, Ruthenium.

**12.** Verfahren zur Herstellung von Gegenständen, wie Kontaktlinsen, aus einem Silikonelastomer nach einem der Ansprüche 1, 2, 4 bis 11, dadurch gekennzeichnet, daß man die epoxydierte Organopolysiloxanzusammensetzung formt und härtet und anschließend das so erhaltene Elastomer mit wenigstens einer Saccharidverbindung, die sich auf die Epoxyfunktionen des Elastomers pfropft, in Kontakt bringt.

**13.** Verfahren nach Anspruch 12, dadurch gekennzeichnet, daß das Formen durch Gießen erfolgt und der so erhaltene Gegenstand mit einer wäßrigen Lösung wenigstens einer der Saccaridverbindungen in Kontakt gebracht wird, um deren Pfropfung auf die Oberfläche in einer Menge zu bewerkstelligen, die geeignet ist, den Gegenstand später benetzbar zu machen.

**14.** Verfahren nach einem der Ansprüche 12 oder 13, dadurch gekennzeichnet, daß die wäßrige Lösung Glucuronsäure als Sacharidverbindung enthält und daß diese Lösung einen sauren pH im Bereich von 3 bis 4 aufweist.

**15.** Verfahren nach Anspruch 13 oder 14, dadurch gekennzeichnet, daß der Gegenstand durch Eintauchen in eine isotonische physiologische Serumlösung benetzbar gemacht wird.